# FASCICULE DE BREVET EUROPEEN

(11) **EP 1 434 710 B1**
(45) Date de publication et mention de la délivrance du brevet: **23.02.2005**
(21) Numéro de dépôt: 02783157.7
(22) Date de dépôt: 12.09.2002
(51) Int. Cl.: B62D 21/02, B62D 21/12, B62D 25/08, B62D 25/20

(54) **CHASSIS DE VEHICULE AUTOMOBILE**
KRAFTFAHRZEUGFAHRGESTELL
MOTOR VEHICLE CHASSIS

(30) Priorité: 13.09.2001 FR 0111846
(43) Date de publication de la demande: 07.07.2004
(73) Titulaire: Peugeot Citroen Automobiles, 92200 Neuilly Sur Seine (FR)
(72) Inventeur: VINCENTI, Richard, F-90350 Evette Salbert (FR)
(74) Mandataire: De Cuenca, Emmanuel Jaime
(86) Numéro de dépôt international: PCT/FR2002/003111
(87) Numéro de publication internationale: WO 2003/022661

(56) Documents cités:
- EP-A- 1 097 857
- US-A- 5 549 349

## Description

La présente invention concerne un châssis de véhicule automobile comprenant deux longeronnets latéraux entre lesquels s'étendent transversalement en y étant fixées la partie de plancher avant, la partie de plancher arrière, une traverse dite traverse « planche à talon » dont les bords longitudinaux supérieur et inférieur sont respectivement fixés aux parties de plancher avant et arrière et des moyens pour rigidifier la traverse planche à talon. US 5549349 décrit un châssis d'après le préambule de la revendication 1.

De nombreux développements récents sur l'aménagement intérieur de l'habitacle d'un véhicule automobile ont conduit à améliorer les agencements des différents éléments entre eux, tels que les sièges, dans celui-ci et leur cinématique dans le but d'augmenter à souhait la place disponible. Ainsi, dans les véhicules de type « break » dans lesquels on a cherché à implanter sept assises, différentes améliorations ont consisté à prévoir des banquettes arrières en partie escamotable, à implanter des sièges de type strapontin à l'arrière du véhicule, de préférence complètement amovibles de l'habitacle.

Une amélioration intéressante pour les véhicules de ce type consisterait à proposer un véhicule avec sept assises individuelles dont cinq arrières seraient obtenus en deux rangées de sièges individuels modulaires et ce sans changer les dimensions connues pour les véhicules break. Pour ce faire, il apparaît absolument nécessaire de disposer d'un châssis avec un plancher le plus plat possible. En effet, la configuration actuelle des châssis dans les véhicules de type break ne permet pas de loger des sièges individuels à l'arrière du véhicule car la hauteur disponible est insuffisante.

Le but de l'invention est alors de proposer un châssis de véhicule automobile qui permette d'obtenir un véhicule de type « break » avec sept assises individuelles dont cinq arrières seraient obtenus en deux rangées de sièges individuels modulaires.

Pour ce faire, l'invention a pour objet un châssis de véhicule automobile comprenant deux longeronnets latéraux entre lesquels s'étendent transversalement en y étant fixées la partie de plancher avant, la partie de plancher arrière, une traverse dite traverse « planche à talon » dont les bords longitudinaux supérieur et inférieur sont respectivement fixés aux parties de plancher avant et arrière et des moyens pour rigidifier la traverse planche à talon remarquable en ce que les moyens de rigidification sont constitués d'une traverse de longueur sensiblement égale à celle de la traverse planche à talon qui s'étend en dessous du bord longitudinal inférieur de celle-ci en y étant fixé et dont chacune des extrémités est fixée à un des longeronnets latéraux.

La solution selon l'invention qui permet d'atteindre très facilement l'objectif recherché est loin d'avoir été évidente. En effet, l'homme de l'art qui cherche à obtenir directement un plancher le plus plat possible dans un véhicule de type break pense tout d'abord à enlever la pièce de hauteur importante disposée au-dessus de la traverse planche à talon. Or, enlever cette pièce appelée « raidisseur planche à talon » revient à réduire considérablement la rigidité du plancher. Cette réduction de rigidité conduit tout d'abord à l'affaissement localisé du plancher lorsqu'un passager prendrait place sur un siège arrière. Ensuite lorsque le véhicule automobile n'est plus statique, le plancher subit les variations d'effort sur le siège en fonction du profil de la route, des freinages et accélérations du véhicule. Ceci conduit à un phénomène dit de pompage du plancher ainsi qu'à des vibrations de la caisse dégradant fortement le confort vibratoire pour les passagers.

Ainsi, l'homme de l'art confronté à ces difficultés techniques chercherait plutôt à redéfinir l'architecture du châssis et de son plancher associé.

Au contraire, les inventeurs ont su judicieusement mettre en évidence que l'implantation d'une traverse en dessous de la traverse planche à talon permettait d'obtenir la rigidité supplémentaire désirée éliminant ainsi tout phénomène de « pompage » et réduisant les nuisances vibratoires précitées. En outre, elle permet une capacité de chargement accrue du véhicule break, objet de l'invention, lorsque les sièges individuels arrières sont complètement enlevés.

Avantageusement, la traverse de rigidification est constituée de deux éléments assemblés entre eux de manière à former un corps creux.

De préférence, les deux éléments sont en tôle emboutie assemblés entre eux par soudure.

De préférence encore, la traverse présente au moins un évidement adapté pour assurer le passage d'au moins un élément, tel qu'un tube d'échappement, entre ladite traverse et le plancher.

Selon un mode de réalisation préféré de l'invention, les moyens de fixation de la traverse de rigidification respectivement au bord longitudinal inférieur de la traverse planche à talon et aux longeronnets latéraux sont amovibles.

Selon ce mode, les moyens de fixation de la traverse de rigidification au bord longitudinal inférieur de la traverse planche à talon sont des vis ou des équerres.

Avantageusement et selon l'invention, la partie du plancher arrière comprend un panneau fixé au bord longitudinal supérieur de la traverse planche à talon et sur lequel est fixée une première traverse supportant l'avant de glissières de siège et au moins un panneau de charge sur lequel est fixée une deuxième traverse supportant l'arrière des glissières de siège.

L'invention concerne également un véhicule automobile de type break comprenant un châssis tel que précédemment décrit.

D'autres avantages et caractéristiques de l'invention seront mieux compris à la lecture de la description détaillée faite en référence au figures suivantes dans lesquelles:
- figures 1a et 1b : une vue en perspective et une vue en coupe d'une partie d'un châssis d'un véhicule automobile selon l'état de l'art;
- figures 2a et 2b :une vue avant et arrière en perspective d'une partie d'un châssis d'un véhicule automobile selon l'invention;
- figure 3 : une vue en perspective d'une traverse selon l'invention.

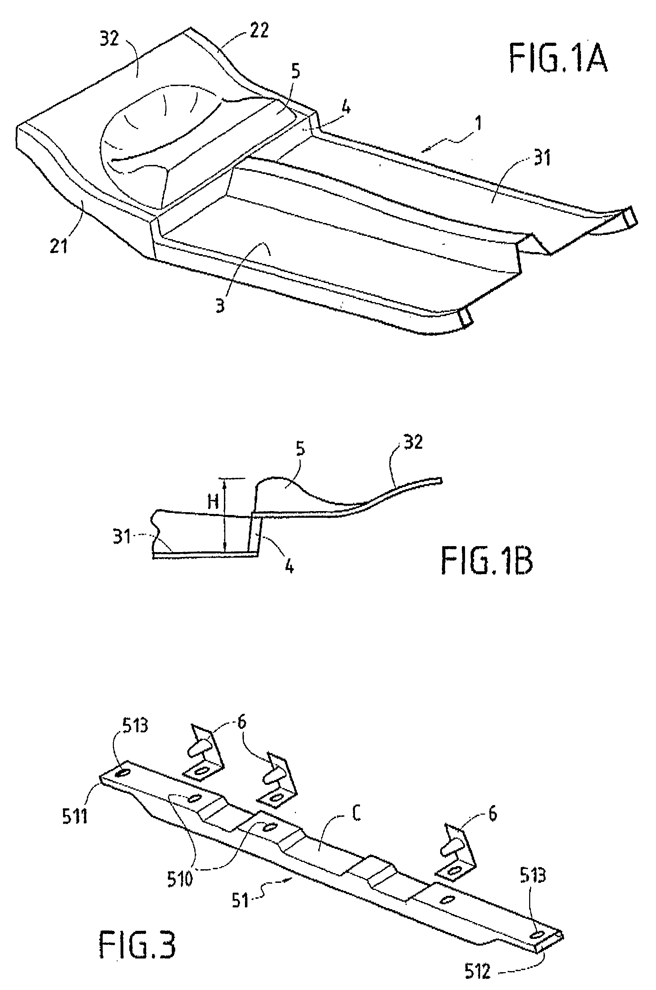

Sur les figures 1a et 1b est représenté une partie d'un châssis 1 d'un véhicule automobile selon l'état de l'art. Ce châssis 1 comporte tout d'abord deux longeronnets latéraux identiques 21,22 qui s'étendent selon l'axe longitudinal du véhicule.

Un plancher 3 s'étend en y étant fixé entre ces deux longeronnets 21,22. Ce plancher comprend une partie avant 31 et une partie arrière 32 reliées entre elles par une traverse 4 dite » traverse planche à talon » par l'intermédiaire de soudures non représentées. Chacune des deux extrémités de cette traverse « planche à talon » 4 est elle-même soudée à un des longeronnets 21,22.

La partie arrière 32 du plancher comprend, à proximité de la traverse planche à talon 4, un raidisseur en tôle 5 dont la forme et l'épaisseur permettent de rigidifier suffisamment cette dernière.

Sur la figure la, on voit que, pour assurer une rigidification suffisante à la traverse planche à talon 4, le raidisseur en tôle 5 doit avoir une hauteur importante de sorte que le dénivelé H existant entre la partie avant du plancher 31 et le sommet du raidisseur 4 est également important, généralement de l'ordre de 250 à 300mm.

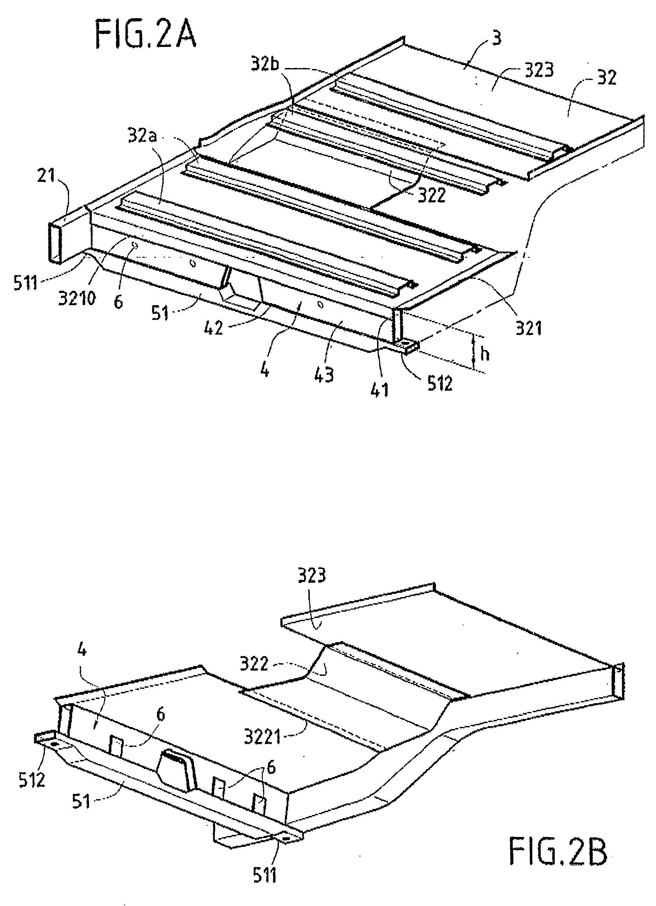

Une partie d'un châssis 1 d'un véhicule automobile de type « break » selon l'invention est représentée aux figures 2a et 2b. La partie arrière 32 du plancher 3 selon l'invention comprend un panneau arrière 321 dont le bord longitudinal avant 3210 est soudé à celui supérieur 41 de la traverse planche à talon 4. Sur ce panneau arrière 321 est fixée une première paire de supports de glissières de sièges 32a adaptée pour recevoir des sièges individuels modulaires.

La partie arrière 32 du plancher 3 selon l'invention comprend également deux panneaux de charge 322,323 soudés entre eux sur un de leurs bords longitudinaux, l'un de ces panneaux de charge 322 étant lui-même soudé par son bord longitudinal avant 3221 à celui arrière du panneau arrière 321 précédemment décrit. Sur chacun de ces panneaux de charge est fixé un support de glissière constituant une deuxième paire de supports de glissières de sièges 32b adaptée pour recevoir également des sièges individuels modulaires.

Une traverse de rigidification 51, représentée en figure 3, de longueur sensiblement égale à celle de la traverse planche à talon 4, s'étend en dessous du bord longitudinal inférieur de celle-ci 42 en y étant fixée, par l'intermédiaire d'équerres 6 amovibles placées dans des alésages 510. Chacune des extrémités 511,512 de cette traverse 51 est fixée respectivement à un des longeronnets latéraux 21,22 par l'intermédiaire de vis non représentées placées dans des alésages 513 prévus à cet effet.

Cette traverse de rigidification 51 est constituée de deux plaques en tôle emboutie assemblées entre elles par soudure en formant un corps creux.

Le corps creux ainsi formé présente dans sa partie milieu un évidement (C) permettant le passage de la ligne d'échappement du véhicule automobile.

La rigidité de ce corps creux est adaptée d'une part pour éliminer tout phénomène de pompage susceptible de se produire et d'autre part réduire au maximum les bruits et vibrations mécaniques susceptible de se propager au niveau de la traverse planche à talon 4.

Avec une telle traverse de rigidification, le plancher 3 du véhicule est sensiblement plat sur toute sa longueur. Ainsi, Le dénivelé h existant entre la partie avant du plancher 31 et le panneau arrière 321 est faible de l'ordre de 150 mm.

L'invention qui vient d'être décrite permet d'obtenir un véhicule automobile de type »break » avec un plancher le plus plat possible et dans lequel il est possible d'implanter sept sièges individuels modulaires. En outre, selon un autre aspect important de l'invention, la traverse de rigidification amovible et qui est proposée sans modification conséquente de l'architecture du véhicule permet de conserver le soubassement de celle-ci dans l'hypothèse où le véhicule à fabriquer est un véhicule de type berline ou monospace. En effet, dans une telle hypothèse, la traverse de rigidification 51 sera complètement enlevée du châssis selon l'invention et des moyens de rigidification connus en soi pourront être rapportés à l'intérieur de la caisse, l'absence de rangée supplémentaire de sièges arrières (véhicule de type berline) ou la hauteur de l'habitacle (véhicule de type monospace) le permettant.

## Revendications

1. Chassis (1) de véhicule automobile comprenant deux longeronnets latéraux (21,22) entre lesquels s'étendent transversalement en y étant fixées la partie de plancher avant (31), la partie de plancher arrière (32), une traverse (4) dite traverse « planche à talon » dont les bords longitudinaux supérieur (42) et inférieur (43) sont respectivement fixés aux parties de plancher avant et arrière et des moyens (5) pour rigidifier la traverse planche à talon, où les moyens de rigidification sont constitués d'une traverse (51) de longueur sensiblement égale à celle de la traverse planche à talon **caractérisé en ce que** la traverse (51) s'étend en dessous du bord longitudinal inférieur de la traverse planche à talon en y étant fixée, chacune des extrémités (511,512) étant fixée à un des longeronnets latéraux.

2. Chassis selon la revendication 1, **caractérisé en ce que** la traverse de rigidification est constituée de deux éléments assemblés entre eux de manière à former un corps creux.

3. Chassis selon la revendication 2, **caractérisé en ce que** les deux éléments sont en tôle emboutie assemblés entre eux par soudure.

4. Chassis selon l'une des revendications précédentes, **caractérisé en ce que** la traverse présente au moins un évidement (C) adapté pour assurer le passage d'au moins un élément, tel qu'un tube d'échappement, entre ladite traverse et le plancher.

5. Chassis selon l'une des revendications précédentes, **caractérisé en ce que** les moyens de fixation de la traverse de rigidification respectivement au bord longitudinal inférieur de la traverse planche à talon et aux longeronnets latéraux sont amovibles.

6. Chassis selon la revendication 5, **caractérisé en ce que** les moyens de fixation de la traverse de rigidification au bord longitudinal inférieur de la traverse planche à talon sont des vis ou des équerres (6).

7. Chassis selon l'une quelconque des revendications précédentes, **caractérisé en ce que** la partie du plancher arrière comprend un panneau (321) fixé au bord longitudinal supérieur de la traverse planche à talon et sur lequel est fixée une première paire de supports de glissières de siège(32a) et au moins un panneau de charge (322,323) sur lequel est fixée une deuxième paire de supports de glissières de siège (32b).

8. Véhicule automobile de type break comprenant un châssis selon l'une quelconque des revendications précédentes.

## Claims

1. Motor vehicle chassis (1) comprising two side members (21, 22) between which there extend transversely, while being fixed thereto, the front part of the floor (31), the rear part of the floor (32), a cross-piece (4) known as a heel-board cross-piece, the upper (42) and lower (43) longitudinal edges of which are fixed respectively to the front and rear parts of the floor and means (5) for rigidifying the heel-board cross-piece, where the rigidification means are constituted by a cross-piece (51) of substantially the same length as the heel-board cross-piece **characterised in that** the cross-piece (51) extends below the lower longitudinal edge of the heel-board cross-piece while being fixed thereto, each of the ends (511, 512) being fixed to one of the side members.

2. Chassis according to Claim 1, **characterised in that** the rigidification cross-piece is constituted by two elements assembled together so as to form a hollow body.

3. Chassis according to Claim 2, **characterised in that** the two elements are made of sheet metal, assembled together by welding.

4. Chassis according to one of the preceding claims, **characterised in that** the cross-piece has at least one recess (C) suitable for ensuring that at least one element, such as an exhaust pipe, can pass between said cross-piece and the floor.

5. Chassis according to one of the preceding claims, **characterised in that** the means for fixing the rigidification cross-piece to the lower longitudinal edge of the heel-board cross-piece and to the side members respectively are removable.

6. Chassis according to Claim 5, **characterised in that** the means for fixing the rigidification cross-piece to the lower longitudinal edge of the heel-board cross-piece are screws or angle brackets (6).

7. Chassis according to any one of the preceding claims, **characterised in that** the rear part of the floor comprises a panel (321) fixed to the upper longitudinal edge of the heel-board cross-piece and to which is fixed a first pair of seat runner supports (32a) and at least one loading panel (322, 323) to which is fixed a second pair of seat runner supports (32b).

8. Motor vehicle of the estate-car type comprising a chassis according to any one of the preceding claims.

## Patentansprüche

1. Kraftfahrzeuggestell (1), das zwei seitliche Längsträger (21, 22) aufweist, zwischen denen sich quer und daran befestigt der vordere Bodenabschnitt (31), der hintere Bodenabschnitt (32), ein Querträger (4) der gestuften Bodenplatte, dessen oberer Längsrand und unterer Längsrand (42, 43) am vorderen beziehungsweise hinteren Bodenabschnitt befestigt sind, und Mittel (5) zum Versteifen des Querträgers der gestuften Bodenplatte erstrecken, die aus einem Querträger (51) von im Wesentlichen gleicher Länge wie der Querträger der gestuften Bodenplatte bestehen, **dadurch gekennzeichnet, dass** sich der Querträger (51) unterhalb des unteren Längsrands des Querträgers der gestuften Bodenplatte erstreckt und an diesem befestigt ist, wobei jedes der Enden (511, 512) an einem der seitlichen Längsträger befestigt ist.

2. Gestell nach Anspruch 1, **dadurch gekennzeichnet, dass** der Versteifungs-Querträger aus zwei Elementen besteht, die so zusammengesetzt sind, dass sie einen hohlen Körper bilden.

3. Gestell nach Anspruch 2, **dadurch gekennzeichnet, dass** die beiden zusammengesetzten Elemente aus gezogenem Blech und aneinander geschweißt sind.

4. Gestell nach einem der vorhergehenden Ansprüche, **dadurch gekennzeichnet, dass** der Querträger mindestens eine Aussparung (C) für den Durchgang mindestens eines Elements, beispielsweise eines Abgasrohrs, zwischen dem Querträger und dem Boden aufweist.

5. Gestell nach einem der vorhergehenden Ansprüche, **dadurch gekennzeichnet, dass** die Mittel zum Befestigen des Versteifungs-Querträgers am unteren Längsrand des Querträgers der gestuften Bodenplatte beziehungsweise an den seitlichen Längsträgern abnehmbar sind.

6. Gestell nach Anspruch 5, **dadurch gekennzeichnet, dass** die Mittel zum Befestigen des Versteifungs-Querträgers am unteren Längsrand des Querträgers der gestuften Bodenplatte Schrauben oder Winkel (6) sind.

7. Gestell nach einem der vorhergehenden Ansprüche, **dadurch gekennzeichnet, dass** der hintere Abschnitt des Bodens eine Platte (321), die am oberen Längsrand des Querträgers der gestuften Bodenplatte befestigt ist und an der ein erstes Paar Schienenträger (32a) für einen Sitz befestigt ist, und mindestens eine Ladeplatte (322, 323) aufweist, an der ein zweites Paar Schienenträger (32b) für einen Sitz befestigt ist.

8. Kraftfahrzeug vom Typ Kombi mit einem Gestell nach einem der vorhergehenden Ansprüche.
